# DEMANDE DE BREVET EUROPEEN

(11) **EP 2 535 093 A2**
(43) Date de publication de la demande: **19.12.2012**
(21) Numéro de dépôt: 12172188.0
(22) Date de dépôt: 15.06.2012
(51) Int. Cl.: A63F 13/02

(54) **Accessoire limiteur de temps de jeu**

(30) Priorité: 15.06.2011 FR 1155222
(71) Demandeur: Bigben Interactive SA, 59818 Lesquin (FR)
(72) Inventeur: Zhang, Michael Weibin, Hong Kong, China (CN)
(74) Mandataire: Vigand, Philippe

(57) **Abrégé**

Accessoire limiteur de temps (10) apte à limiter le temps de jeu d'un utilisateur d'une console de jeu portable (100), la console comportant au moins un port de connexion pour un composant électronique amovible (20, 30), caractérisé en ce que l'accessoire limiteur de temps (10) est apte à être connecté à la console de jeu portable (100) par l'intermédiaire du composant électronique amovible (20, 30).

## Description

La présente invention concerne de manière générale un accessoire limiteur du temps de jeu d'une console de jeu portable.

II est connu dans l'art antérieur de tels accessoires à brancher sur un des emplacements ou ports réservés au branchement de cartouches de jeu, pour des consoles comportant deux ports de jeu. Ces accessoires permettent d'indiquer à l'utilisateur qu'il joue depuis trop longtemps par l'émission de signaux sonores ou visuels pour l'inciter à cesser de jouer. En contrepartie, cet accessoire étant branché sur un port destiné à un type de cartouche de jeu, il n'est pas possible de l'utiliser en même temps qu'un jeu stocké sur ce type de cartouche. Ensuite, ce système présente l'inconvénient de ne pas pouvoir être utilisé sur toutes les consoles portables, en particulier sur celles où il n'y a qu'un port de connexion pour les cartouches de jeu et en général sur les consoles n'ayant qu'un seul port de connexion par fonction, comme par exemple un seul port pour une cartouche de jeu ou un seul port pour une carte mémoire. II n'est alors pas possible de connecter l'accessoire limiteur de temps sans compromettre une des fonctions de la console de jeu portable. Enfin, ce dispositif étant connecté sur un port dédié à une cartouche de jeu, il est possible de facilement le retirer, de sorte que le système est aisément contournable pour continuer à jouer malgré le dépassement de la durée maximale de jeu autorisée.

Le document US 2006/0287080 A1 décrit un système de jeu comprenant une console de jeu et un module de limitation du temps de jeu limitant la sauvegarde de l'état du jeu sur une carte mémoire pendant un temps de jeu maximal. La carte mémoire est spécifique et système présente l'inconvénient de nécessiter cette carte spécifique. De plus, la console n'est pas éteinte à la fin du temps de jeu et le joueur peut continuer à utiliser la console, même s'il ne peut plus effectuer de sauvegardes.

Le document US 2004/0014528 A1 décrit quant à lui un accessoire à brancher sur le port de la cartouche de jeu d'une console portable pour lui apporter des capacités de mémoire supplémentaires, tout en permettant la connexion de la cartouche contenant le jeu, via un port de connexion agencé sur l'accessoire. Ce dispositif ne contient aucune fonction de limitation du temps de jeu.

Un but de la présente invention est de répondre aux inconvénients des documents de l'art antérieur mentionnés ci-dessus et en particulier, tout d'abord, de proposer un accessoire à utiliser avec une console de jeu sans bloquer aucune fonction ou faculté de connexion initialement offerte par la console, et sans modifier la carte mémoire utilisée pour jouer.

Pour cela un premier aspect de l'invention concerne un accessoire limiteur de temps apte à limiter le temps de jeu d'un utilisateur d'une console de jeu portable, la console de jeu portable comportant au moins un port de connexion pour un composant électronique amovible, **caractérisé en ce que** l'accessoire limiteur de temps est apte à être connecté à la console de jeu portable par l'intermédiaire du composant électronique amovible comportant une carte mémoire et un adaptateur lecteur de carte mémoire agencé pour assurer la connexion entre l'accessoire limiteur de temps et la console de jeu portable.

L'accessoire selon l'invention ne limite pas l'utilisation des fonctions de la console de jeu portable car il se connecte par l'intermédiaire du composant électronique amovible et non à la place du composant en occupant son port de connexion et en rendant inopérante la fonction associée. L'utilisateur peut ainsi continuer à utiliser les fonctions du composant amovible, tout en ayant l'accessoire limiteur de temps connecté à la console. Par ailleurs, un tel accessoire externe à la console ne nécessite aucun démontage des organes interne de celle-ci, l'utilisateur n'a qu'à connecter la console à l'accessoire pour permettre la limitation du temps de jeu. En d'autres termes, la console reste standard et n'est pas modifiée. De plus, l'invention propose d'utiliser un adaptateur lecteur de la carte mémoire pour assurer la connexion. Cela évite d'avoir recours à modifier la carte mémoire elle-même pour réaliser la connexion. L'adaptateur est un composant plus simple à fabriquer avec une fonction spécifique de connexion. La carte mémoire reste standard, ce qui simplifie l'utilisation de l'accessoire, car il est compatible avec des cartes mémoires que posséderait déjà l'utilisateur.

De manière avantageuse, l'accessoire limiteur de temps comporte des moyens de fixation sur la console de jeu portable, et les moyens de fixations sont aptes à empêcher un démontage de l'accessoire limiteur de temps de la console de jeu portable avec des outils standards. La fixation de l'accessoire sur la console est sécurisée, l'utilisateur ne peut pas démonter l'accessoire avec des outils standards. L'accessoire est livré avec un outil spécifique et sécurisé pour actionner les moyens de fixation et une fois fixé à la console, il ne peut plus être retiré sans l'outil spécifique, ce qui prévient tout piratage du système.

Avantageusement, les moyens de fixation sont des vis de sécurité. Cette mise en oeuvre de l'invention est économique.

Avantageusement, l'accessoire limiteur de temps forme un étui de protection de la console de jeu portable. L'invention tire parti de la fixation de l'accessoire à la console pour proposer une protection mécanique contre les chocs. En effet, la présente invention créée une synergie entre la fixation à demeure sur la console et la protection contre les chocs.

Un second aspect de l'invention est un composant électronique amovible apte à se connecter à une console de jeu portable, **caractérisé en ce qu'**il est apte à connecter la console de jeu portable avec un accessoire limiteur de temps selon le premier aspect de l'invention. Le composant selon l'invention, tout en se connectant à la console pour remplir une fonction, peut également permettre de connecter l'accessoire limiteur de temps à la console. En lien avec l'accessoire limiteur de temps du premier aspect, le composant électronique amovible selon le second aspect permet d'assurer la connexion avec la console de jeu pour fournir la fonction de limitation du temps de jeu sur cette dernière.

Une réalisation particulièrement intéressante consiste en ce que le composant électronique amovible comporte un adaptateur lecteur de carte mémoire. L'invention propose d'utiliser un adaptateur lecteur de la carte mémoire pour assurer la connexion. Cela évite d'avoir recours à modifier la carte mémoire elle-même pour réaliser la connexion. L'adaptateur est un composant plus simple à fabriquer avec une fonction spécifique de connexion.

Avantageusement, l'adaptateur lecteur de carte mémoire comporte des moyens de connexion aptes à connecter électriquement l'accessoire limiteur de temps externe à la console de jeu portable avec au moins une connexion standard de lecture d'une carte mémoire de la console de jeu portable. L'adaptateur selon l'invention comporte des contacts supplémentaires pour assurer la connexion. Ceux-ci relient les touches de contact de la console agencés au fond d'une rainure aux zones de contact de l'accessoire, agencées à l'extérieur de la console.

En alternative, l'adaptateur lecteur de carte mémoire comporte des moyens de connexion aptes à connecter par liaison sans fil l'accessoire limiteur de temps externe à la console de jeu portable. L'adaptateur selon cette alternative de l'invention offre une simplification de réalisation de l'accessoire, car il n'y a plus de zones de contact électrique entre le composant amovible et l'accessoire limiteur de temps à prévoir, les informations sont transmises par ondes radio.

Un troisième aspect de l'invention consiste en un système limiteur de temps comprenant un accessoire limiteur de temps selon le premier aspect de l'invention et un composant électronique amovible selon le deuxième aspect de l'invention.

Un quatrième aspect de l'invention est une console de jeu portable comprenant un système limiteur de temps selon le troisième aspect de l'invention.

L'accessoire limiteur de temps de jeu selon l'invention est apte à limiter le temps d'une session continue de jeu d'un utilisateur d'une console de jeu portable à un premier temps maximal de jeu et il est **caractérisé en ce que** l'accessoire limiteur de temps est apte à limiter à un deuxième temps maximal de jeu, un temps de jeu total au cours d'une période de temps prédéterminée supérieure au premier temps maximal de jeu. L'utilisation de la console est réellement contrôlée car l'accessoire prend en compte le temps de jeu total au cours d'une période de temps prédéterminée, ce qui permet de limiter le temps de jeu non seulement au cours d'une session continue, mais également au cours d'une période de temps supérieure au temps maximal de jeu autorisé lors d'une session continue de jeu. Par ailleurs, un tel accessoire externe à la console ne nécessite aucun démontage des organes interne de celle-ci, l'utilisateur n'a qu'à connecter la console à l'accessoire pour permettre la limitation du temps de jeu. En d'autres termes, la console reste standard et n'est pas modifiée.

De manière avantageuse, l'accessoire comporte des moyens de commande aptes à provoquer l'extinction de la console de jeu portable à l'issue du deuxième temps maximal de jeu et aptes à empêcher la réutilisation de la console de jeu portable avant l'issue de la période de temps prédéterminée. L'accessoire selon l'invention permet de contrôler le temps de jeu total au cours de la période de temps prédéterminée en empêchant l'utilisation de la console pendant cette période si le deuxième temps de jeu maximal est atteint.

De manière avantageuse, l'accessoire comprend des moyens de fixation sécurisés sur la console de jeu portable. Le joueur ne peut pas démonter l'accessoire pour continuer à jouer, l'utilisation est sûre, même en l'absence d'une personne pour contrôler le joueur. On peut prévoir d'utiliser des vis de sécurité indémontables avec des outils standards.

De manière avantageuse, la période de temps prédéterminée est une journée de vingt quatre heures. Le temps de jeu quotidien est contrôlé, de sorte que le joueur peut avoir assez de disponibilité pour réaliser d'autres tâches quotidiennes.

Avantageusement, le premier temps maximal de jeu au cours de la session continue de jeu et/ou le deuxième temps maximal de jeu au cours de la période de temps prédéterminée sont réglables uniquement par l'intermédiaire d'une clé de réglage. Seule la personne en possession de la clé de réglage peut modifier le temps de jeu maximal.

Avantageusement, l'accessoire limiteur de temps est apte à provoquer une extinction de la console de jeu portable à l'issue du temps maximal de jeu au cours de la session continue de jeu ou de la période de temps prédéterminée, et l'accessoire limiteur de temps est apte à provoquer une sauvegarde des paramètres du jeu avant de provoquer l'extinction de la console de jeu portable. Les données sont sauvegardées, de sorte que le joueur pourra reprendre la partie en cours dès qu'il pourra à nouveau utiliser la console.

Avantageusement, l'accessoire forme un étui de protection de la console de jeu portable. L'invention tire parti de la fixation de l'accessoire à la console pour proposer une protection mécanique de la console. En effet, la présente invention créée une synergie entre la fixation à demeure sur la console et la protection contre les chocs. Avantageusement, l'accessoire comporte des moyens de mesure d'une distance séparant la console de jeu portable de l'utilisateur et en ce qu'il comporte des moyens d'alarme aptes à alerter l'utilisateur lorsqu'il est trop proche de la console de jeu portable. L'accessoire permet de limiter la fatigue visuelle de l'utilisateur.

Très avantageusement, les moyens d'alarme sont aptes à prendre en compte un temps de jeu pour alerter l'utilisateur qu'il est trop proche de la console de jeu portable. Les moyens d'alarme selon la présente invention utilisent l'information de temps de jeu disponible pour moduler la distance minimale acceptable pour l'utilisateur. On peut envisager d'augmenter cette distance au fur et à mesure de l'utilisation de la console par exemple.

Un dernier aspect de l'invention est un procédé de limitation du temps de jeu d'une console de jeu portable utilisée par un joueur et comprenant les étapes consistant à :
- prendre en compte un temps de jeu au cours d'une session continue de jeu ;
- provoquer l'extinction de la console de jeu portable lorsque le temps de jeu au cours d'une session continue de jeu excède un premier temps maximal de jeu ;
- prendre en compte un temps de jeu total au cours d'une période de temps prédéterminée supérieure au premier temps maximal de jeu
- provoquer l'extinction de la console de jeu portable lorsque le temps de jeu total au cours de la période prédéterminée excède un deuxième temps maximal de jeu autorisé.

Avantageusement, les étapes d'extinction de la console de jeu portable sont précédées par les étapes consistant à
- avertir le joueur à un intervalle de temps suffisant pour permettre une sauvegarde de la partie en cours avant de provoquer l'extinction de la console de jeu portable, et/ou
- procéder à une sauvegarde automatique de la partie en cours avant de provoquer l'extinction de la console de jeu portable.

Avantageusement, le procédé comprend une étape consistant à régler le premier temps maximal de jeu autorisé lors d'une session continue de jeu et/ou le deuxième temps maximal de jeu autorisé lors de la période de temps prédéterminée.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente l'accessoire limiteur de temps selon l'invention ;
- la figure 2 représente le composant électronique amovible selon l'invention ;
- la figure 3 représente une console de jeu équipée de l'accessoire selon l'invention.

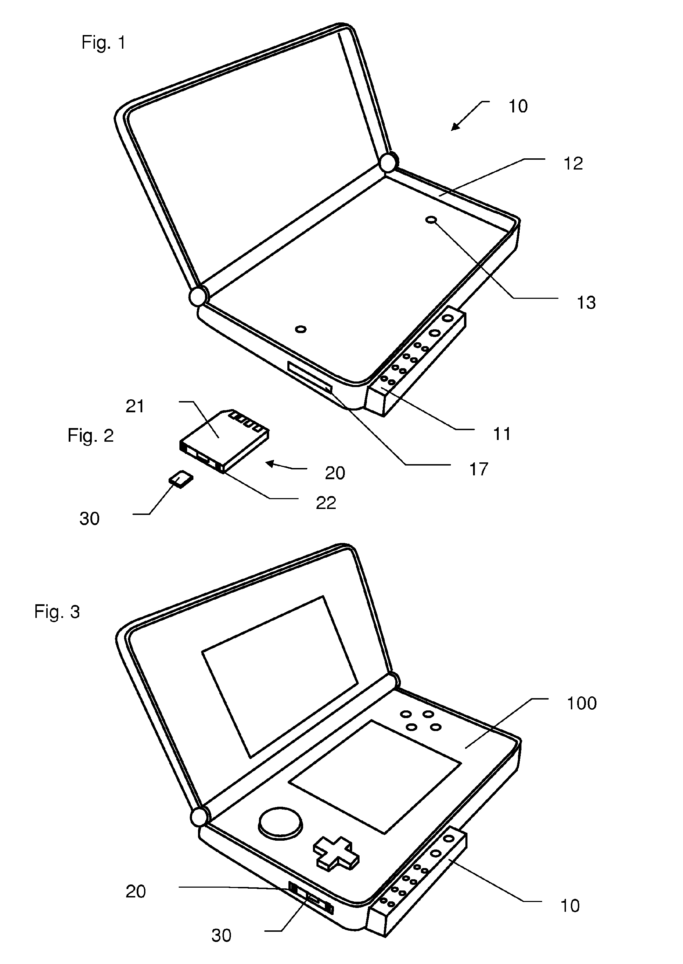

La figure 1 représente un accessoire 10 limiteur du temps de jeu d'une console de jeu portable. L'accessoire comporte un dispositif électronique 11 apte à décompter le temps de jeu et à le limiter si le joueur dépasse une durée maximale autorisée, en provoquant l'arrêt de la console par exemple. L'accessoire 10, afin de garantir qu'il ne sera pas retiré afin de pouvoir jouer au-delà de la limite imposée, est fixé à la console de jeu au moyen de vis de fixation non représentées, par les trous 13. Ces vis de fixation peuvent être des vis dites "de sécurité", c'est-à-dire qu'elles ne sont pas manoeuvrables avec des outils standards. On peut par exemple citer des vis à empreinte creuse en étoile, et comportant un ergot au centre de l'empreinte creuse. Seules des clés évidées en leur centre peuvent coopérer avec une telle empreinte, et ces clés ne sont pas standards. Comme l'accessoire 10 est fixé à demeure sur la console, la présente invention propose avantageusement d'apporter une fonction supplémentaire de protection en donnant à l'accessoire 10 le forme d'un étui de protection 12. Enfin, pour ne pas condamner les fonctions de la console, une fente 17b est agencée pour permettre d'insérer ou retirer une carte mémoire dans le port de la console prévu à cet effet.

La figure 2 représente le composant électronique amovible selon l'invention. II s'agit d'une carte mémoire 30 et d'un adaptateur 20 apte à s'insérer dans le port de carte mémoire de la console. Deux zones de connexion 22 reliées aux touches de contact standard 23 de l'adaptateur sont agencées sur la face de l'adaptateur 20 restant à l'extérieur de la console une fois l'adaptateur 20 inséré dans la rainure de la console réservée aux cartes mémoire. Le composant est ainsi apte à assurer une connexion entre les zones de connexion 22 et les connexions de la console agencées au fond de la rainure prévue pour la carte mémoire.

La figure 3 représente une console 100 équipée de l'accessoire 10, avec l'adaptateur 20 et la carte mémoire 30 en place. Ainsi, l'accessoire limiteur de temps 10 est connecté à la console par l'intermédiaire de la carte 30 et de l'adaptateur 20, pour décompter le temps d'utilisation et éventuellement provoquer l'extinction de la console si le temps maximal de jeu autorisé est dépassé.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un composant électronique amovible comprenant un adaptateur et une carte mémoire pour réaliser la connexion entre l'accessoire limiteur de temps et la console, mais on pourrait également envisager d'utiliser la cartouche de jeu ou un adaptateur pour la cartouche de jeu comme composant intermédiaire de connexion.

## Revendications

1. Accessoire limiteur de temps (10) apte à limiter le temps de jeu d'un utilisateur d'une console de jeu portable (100), la console comportant au moins un port de connexion pour un composant électronique amovible (20, 30), **caractérisé en ce que** l'accessoire limiteur de temps (10) se connecte à la console de jeu portable (100) par l'intermédiaire du composant électronique amovible (20, 30) comportant une carte mémoire (30) et un adaptateur (20) lecteur de carte mémoire agencé pour assurer la connexion entre l'accessoire limiteur de temps (10) et la console de jeu portable (100).

2. Accessoire limiteur de temps (10) selon la revendication 1 comportant des moyens de fixation sur la console de jeu portable (100), **caractérisé en ce que** les moyens de fixation sont aptes à empêcher un démontage de l'accessoire limiteur de temps (10) de la console de jeu portable (100) avec des outils standards.

3. Accessoire limiteur de temps (10) selon la revendication 2, **caractérisé en ce que** les moyens de fixation sont des vis de sécurité.

4. Accessoire limiteur de temps selon l'une des revendications 1 à 3, **caractérisé en ce qu'**il forme un étui de protection (12) de la console de jeu portable (100).

5. Composant électronique amovible apte à se connecter à une console de jeu portable (100), **caractérisé en ce qu'**il est apte à connecter la console de jeu portable (100) avec un accessoire limiteur de temps (10) selon l'une des revendications 1 à 4, **en ce qu'**il comporte une carte mémoire (30), et **en ce qu'**il comporte un adaptateur (20) lecteur de carte mémoire agencé pour assurer la connexion entre l'accessoire limiteur de temps (10) et la console de jeu portable (100).

6. Composant électronique amovible selon la revendication 5, **caractérisé en ce que** l'adaptateur (20) lecteur de carte mémoire comporte des moyens de connexion (22) aptes à connecter électriquement l'accessoire limiteur de temps (10) externe à la console de jeu portable (100) avec au moins une connexion standard de lecture d'une carte mémoire de la console de jeu portable (100).

7. Composant électronique amovible selon la revendication 5, **caractérisé en ce que** l'adaptateur (20) lecteur de carte mémoire comporte des moyens de connexion aptes à connecter par liaison sans fil l'accessoire limiteur de temps (10) externe à la console de jeu portable (100).

8. Système limiteur de temps comprenant un accessoire limiteur de temps (10) selon l'une des revendications 1 à 4 et un composant électronique amovible (20, 30) selon l'une des revendications 5 à 7.

9. Console de jeu portable (100) comprenant un système limiteur de temps selon la revendication 8.
